# FASCICULE DE BREVET EUROPEEN

(11) **EP 4 000 159 B1**
(45) Date de publication et mention de la délivrance du brevet: **11.10.2023**
(21) Numéro de dépôt: 20750349.1
(22) Date de dépôt: 09.07.2020
(51) Int. Cl.: H02J 9/06, H02J 3/46

(54) **SYSTEME D'ALIMENTATION SANS INTERRUPTION A PARTAGE DYNAMIQUE DE PUISSANCE DE DERIVATION**
UNTERBRECHUNGSFREIES STROMVERSORGUNGSSYSTEM MIT DYNAMISCHER BYPASS-STROMTEILUNG
UNINTERRUPTIBLE POWER SUPPLY SYSTEM WITH DYNAMIC BYPASS-POWER SHARING

(30) Priorité: 19.07.2019 FR 1908246
(43) Date de publication de la demande: 25.05.2022
(60) Demande divisionnaire: 23172408.9
(73) Titulaire: Socomec, 67230 Benfeld (FR)
(72) Inventeur: PAVAN, Federico, Pietro, 36030 COSTABISSARA (VI) (IT); VIVIAN, Michele, 36050 SOVIZZO (VI) (IT)
(74) Mandataire: Cabinet Beau de Loménie
(86) Numéro de dépôt international: PCT/FR2020/051246
(87) Numéro de publication internationale: WO 2021/014069

(56) Documents cités:
- US-A1- 2003 048 006
- US-A1- 2013 193 761
- US-A1- 2016 111 916
- US-A1- 2017 163 086
- US-A1- 2018 301 930

## Description

### Domaine Technique

L'invention concerne de manière générale les alimentations électriques sans interruptions (ASI), et plus particulièrement un système de dérivation automatique de l'alimentation partagée dans une installation comportant une pluralité d'alimentations électriques sans interruptions couplées électriquement en parallèle.

### Technique antérieure

L'invention peut s'appliquer à toutes les alimentations électriques sans interruption avec un commutateur statique de dérivation contrôlé indépendamment phase par phase, c'est-à-dire avec une technologie de redresseur à contrôle de silicium, dénommée en anglais « Silicon Controlled Rectifier » (SCR).

Une alimentation sans interruption (ASI) est un appareil électrique capable d'alimenter une charge en dépit de variations de qualité et / ou de disponibilité de l'énergie fournie par les services publics.

Une ASI en ligne classique redresse la puissance d'entrée fournie par un réseau électrique à l'aide d'un circuit de correction du facteur de puissance, dénommée en anglais « Power Factor Correction Circuit » (PFC), afin d'alimenter un bus à courant continu (DC). La tension continue redressée est généralement utilisée pour charger une batterie lorsque le secteur est disponible, ainsi que pour alimenter le bus continu. En l'absence d'alimentation secteur, la batterie alimente le bus DC. À partir du bus DC, un onduleur génère une tension de sortie alternative vers la charge. Étant donné que le bus DC est alimenté par le secteur ou par la batterie, la puissance de sortie de l'onduleur reste ininterrompue en cas de panne du secteur et si la batterie est suffisamment chargée. Les ASI en ligne classiquement connues peuvent également fonctionner en mode dit de dérivation, ou bypass, où une alimentation non conditionnée avec une protection de base est fournie directement à une charge par une source d'alimentation en courant alternatif (AC) via une ligne de dérivation. La source d'alimentation AC utilisée dans le mode de dérivation peut être identique à celle utilisée pour le redresseur ou à une source distincte (auxiliaire).

Un système d'alimentation sans interruption (système d'ASI) a ainsi un circuit de dérivation, ou chemin de dérivation, qui est un chemin d'alimentation contournant l'ASI, c'est-à-dire contournant le redresseur, l'onduleur et l'alimentation en courant continu (DC) telle que la batterie qui forment une unité d'alimentation sans interruption (unité d'ASI). Un circuit de dérivation automatique peut être utilisé par l'unité d'ASI pour commuter sa charge sur l'alimentation secteur si le système d'ASI est surchargé ou en panne interne. Un circuit de dérivation manuel, de maintenance ou de service permettra à l'utilisateur d'isoler, de maintenir ou de retirer l'unité d'ASI sans interrompre l'alimentation de la charge en commutant la charge sur le secteur via le circuit de dérivation.

Ainsi, un commutateur de dérivation est un ajout non essentiel à un système d'ASI qui, bien que ne faisant pas partie intégrante du fonctionnement d'une alimentation sans interruption, est clairement utile en cas de maintenance ou de réparation. En cas de problème ou s'il faut retirer une unité pour la réparer, un commutateur de dérivation garantit le maintien de la continuité de l'alimentation en cas de panne.

Il existe deux principaux types de commutateurs de dérivation qui remplissent des fonctions similaires mais distinctes. Il s'agit des commutateurs de dérivation statique et des commutateurs de dérivation de maintenance externe.

Le commutateur de dérivation statique, ou bypass statique, est utilisé en tant que sécurité intégrée pour l'onduleur. En cas de défaillance de l'onduleur, la charge tombera automatiquement sur l'entrée d'alimentation principale, ce qui garantit une alimentation continue. Ce commutateur s'adapte à presque tous les systèmes d'ASI en ligne, ce qui constitue une mesure de sécurité supplémentaire pour garantir la continuité de l'alimentation.

Le commutateur de dérivation de maintenance externe, ou bypass de maintenance externe, est relié à l'extérieur d'un système d'ASI et est parfois appelé en anglais « wraparound bypass ». Cette dérivation est utilisée afin de poursuivre le flux d'alimentation pendant que l'ASI est isolée et facile à retirer pour réparation. L'alternative consiste à mettre tout le réseau hors tension afin de retirer l'ASI, ce qui, pour certaines entreprises, peut impliquer plusieurs heures d'indisponibilité et leur coûter des sommes considérables. De plus, dans le cas improbable où le système d'ASI se trouverait lui-même en panne, cet interrupteur s'assurera que la charge est transférée en toute sécurité et permet à l'unité de pouvoir être retirée et remplacée facilement.

Pour améliorer l'évolutivité et / ou la redondance, deux ou plusieurs ASI peuvent être connectés électriquement pour former un seul système d'ASI en parallèle avec une sortie. Dans un tel système, la combinaison de plusieurs ASI peut augmenter la capacité d'alimentation d'une charge reliée au système d'ASI en parallèle. De plus, si l'une des ASI couplée en parallèle tombe en panne, les autres ASI couplées en parallèle peuvent faire une copie de sauvegarde pour l'ASI défaillante.

En règle générale, un système d'ASI en parallèle qui fonctionne en mode dérivation ne peut pas contrôler activement le courant traversant les différents chemins de dérivation.

En effet, dans un système d'ASI en parallèle, une répartition de charge réussie (c'est-à-dire égale) entre les ASI en ligne couplées en parallèle est obtenue en mode en ligne ou sur batterie en faisant fonctionner l'onduleur de chaque ASI en ligne afin de réguler correctement la puissance fournie à chaque ASI en ligne à la sortie unique (couplée à la charge). Cependant, un partage de charge réussi entre des ASI en ligne couplées en parallèle est beaucoup plus difficile à obtenir en mode dérivation, où une alimentation non conditionnée est fournie par chaque ASI à la sortie unique. Plus précisément, même si des ASI en ligne de même classe sont couplées en parallèle à une seule sortie et alimentent chacun une sortie (c'est-à-dire la charge) en mode dérivation, les différences de fabrication des composants de chaque onduleur et les différences dans les câbles couplant chaque ASI à la sortie unique peut entraîner une répartition inégale de la charge entre chaque ASI couplée en parallèle.

Par exemple, dans le cas où deux ASI ont leur circuit de dérivation couplées électriquement en parallèle l'un avec l'autre. Si l'impédance du circuit de dérivation de chaque ASI est identique à l'autre, chaque ASI aura exactement 50% de la charge. Cependant, toute inadéquation de l'impédance du circuit de dérivation provoquera un partage de puissance différent entre les deux ASI.

Et, si la charge couplée à l'installation utilise presque 100% de la puissance que l'installation peut fournir, c'est-à-dire près de 100% du taux de charge, la nonconcordance d'impédance peut entraîner le fonctionnement de l'une des ASI en surcharge tandis que l'autre ne l'est pas, créant ainsi un dysfonctionnement potentiel de l'ensemble du système.

En effet, si une charge est partagée de manière inégale entre des ASI en ligne couplés en parallèle et fonctionnant en mode dérivation, l'une des ASI peut être surchargée, ce qui peut entraîner des dommages aux composants de l'ASI. Le partage inégal d'une charge entre des ASI en ligne couplées en parallèle peut également entraîner la création d'un circuit de protection en amont (un disjoncteur, par exemple) lors du déclenchement de l'une des ASI, ce qui entraîne le transfert de sa part de la charge aux autres ASI couplées en parallèle. La charge supplémentaire transférée aux autres ASI peut entraîner le déclenchement d'un circuit de protection en amont dans une autre des ASI et le transfert de sa charge aux autres ASI couplées en parallèle. À mesure que le processus de déclenchement / transfert de charge du disjoncteur se poursuit vers d'autres ASI, les dernières ASI risquent de ne plus être en mesure de supporter la charge et celle-ci peut être abandonnée.

En général, l'inadéquation de puissance est directement proportionnelle à l'inadéquation d'impédance et indirectement à l'impédance. Pour cette raison, et compte tenu également des propriétés d'impédance des câbles, les onduleurs à haute puissance sont davantage affectés par le problème de partage de l'alimentation bypass.

Une technique courante pour traiter une répartition inégale de la charge entre des ASI en parallèle fonctionnant en mode dérivation consiste à identifier la partie réelle de la charge supportée par chaque ASI (c'est-à-dire la partie de répartition de la charge) couplée en parallèle et à régler l'impédance entre chaque ASI et la charge pour tenter de répartir uniformément la charge sur l'ASI. L'impédance entre chaque ASI et la charge peut être configurée en ajustant la longueur du câble reliant chaque ASI à la charge et / ou en ajoutant une inductance, c'est-à-dire une inductance également appelée inductance de partage de dérivation, entre une ASI et la charge.

Cependant, une telle solution ne peut qu'atténuer le déséquilibre impédance et ne peut donc pas garantir un niveau élevé de partage de la puissance de dérivation. En effet, le partage parfait est très difficile à atteindre, normalement ± 10%, en raison du déséquilibre inductif de partage.

De plus, cette solution matérielle présente également l'inconvénient d'augmenter le coût total, de réduire l'efficacité, de réduire la fiabilité, d'augmenter l'encombrement de l'installation et d'en augmenter le poids.

Par exemple, il est généralement admis que, malgré le réglage des longueurs et / ou l'ajout d'amortisseurs aux câbles couplant des ASI en parallèle à une charge, un nombre maximal de quatre ASI en ligne, ou unités d'ASI, fonctionnant en mode dérivation peut être couplé en parallèle, étant donné que pour un couplage de plus de quatre ASI en ligne en parallèle résultera en un écart de portion de partage de charge de plus de 10% entre les ASI. Et même avec quatre onduleurs en ligne parallèles fonctionnant en mode dérivation, un écart pouvant atteindre 10% de la portion de répartition de la charge de chaque ASI peut se produire.

Il est connu du document US 2017/163086 un système d'ASI en parallèle comprenant une pluralité d'ASI configurées pour être couplées en parallèle, chaque ASI comprenant :
- une entrée configurée pour être couplée à une source d'alimentation et pour recevoir une puissance d'alimentation en entrée,
- une sortie couplée à une charge et configurée pour fournir une puissance de sortie à la charge dérivée d'au moins la puissance d'entrée, et
- une ligne de dérivation couplée sélectivement entre l'entrée et la sortie via un commutateur de dérivation, le commutateur de dérivation, ou commutateur statique, étant configuré pour se fermer dans un premier mode de fonctionnement, couplant l'entrée de l'ASI à la sortie de l'ASI via la ligne de dérivation, et pour ouvrir dans un deuxième mode de fonctionnement, découpler l'entrée de l'ASI de la sortie de l'ASI, et
- un contrôleur commun configuré pour mesurer la valeur du courant circulant dans la ligne de dérivation ainsi que la valeur efficace, ou « root mean square » en anglais, et commander les commutateurs de dérivation de chaque ASI.

Le contrôleur commun du système décrit dans le document US 2017/0163086 crée clairement un point de défaillance unique critique qui peut être fatal au système, puisqu'une défaillance du contrôleur compromet le partage actuel de l'ensemble du système avec une éventuelle défaillance en cascade de tous les contournements.. Dans l'industrie des ASI, les systèmes parallèles sont adoptés pour tirer parti de leur redondance et la présence d'un point de défaillance unique du système décrit dans le document US 2017/0163086 élimine cette possibilité de redondance, ce qui rend le système en parallèle non opérationnel et donc non souhaitable.

### Exposé de l'invention

L'invention est définie par la revendication indépendante 1. Des modes de réalisation préférés de l'invention sont définis par les revendications dépendantes.

L'invention vise à fournir une solution éliminant le concept d'augmentation de l'impédance physique afin de supprimer les inconvénients mentionnés ci-dessus, et permettant d'atteindre une erreur nulle à l'état stationnaire et présentant une adaptation parfaite de la puissance entre le circuit de dérivation des différents alimentations sans interruptions de l'installation.

Dans un premier objet de l'invention, il est proposé un système d'alimentation sans coupure (système d'ASI) comprenant une pluralité de sources d'alimentation sans coupure (ASI) couplées en parallèle entre une entrée principale configurée pour être couplée à une source d'alimentation et recevoir une puissance d'entrée, et une sortie principale configurée pour être couplée à une charge et fournir une puissance de sortie à la charge dérivée d'au moins la puissance d'entrée, chaque ASI comprenant :
- une entrée couplée à l'entrée principale,
- une sortie couplée à la sortie principale, et
- une ligne de dérivation couplée entre l'entrée et la sortie via un commutateur de dérivation configuré pour être fermé dans un premier mode de fonctionnement, couplant ladite entrée à ladite sortie via la ligne de dérivation, et pour être ouvert dans un deuxième mode de fonctionnement, découplant ladite entrée de ladite sortie.

Selon une caractéristique générale de l'invention, chaque ASI du système d'ASI comprend une unité de commande en communication avec l'unité de commande de toutes les autres ASI du système d'ASI. L'unité de commande de chaque ASI comprend :
- un premier bloc comprenant une première unité configurée pour surveiller un signal de courant circulant dans la ligne de dérivation de son ASI et déterminer une valeur quadratique moyenne (RMS), c'est-à-dire une valeur efficace, de l'intensité du courant dudit signal de courant, une deuxième unité configurée pour collecter les valeurs RMS de son ASI et des autres ASI du système d'ASI pour lequel le commutateur de dérivation est fermé, et pour définir une valeur de référence RMS correspondant à la valeur RMS la plus basse collectée, et une troisième unité configurée pour déterminer un délai d'activation pour la fermeture du commutateur de dérivation de son ASI, le retard d'activation étant égal à zéro si la valeur RMS de son ASI est égale à la valeur de référence RMS et le délai d'activation étant différent de zéro sinon, et
- un deuxième bloc comprenant une quatrième unité configurée pour contrôler le commutateur de dérivation de son ASI en fonction du délai d'activation émis par la troisième unité, le commutateur de dérivation étant maintenu fermé si le délai d'activation est à zéro, et le commutateur de dérivation étant ouvert pendant un certain temps correspondant au délai d'activation puis fermé autrement.

A tout moment, il y a toujours au moins un commutateur de dérivation fermé afin d'assurer un chemin direct entre l'entrée principale et la sortie principale du système d'ASI.

Le système d'ASI selon l'invention comprend ainsi une structure électrique comportant une pluralité d'unités de commande réparties sur chacune des ASI du système d'ASI. Comme indiqué ci-dessus, cette architecture électrique est réalisée sans relation maître-esclave entre les unités de commande des différentes ASI, contrairement au système décrit dans l'état de la technique comme par exemple dans le document US 2017/0163086 qui a toujours au moins un contrôleur principal ou un contrôleur principal gérant les différentes ASI ou les contrôleurs de l'ASI.

La structure de la présente invention utilisation des unités de commande distribuées sur chacune des ASI élimine la criticité du point de défaillance unique et crée donc une structure de partage de courant adaptée à un système en parallèle réel. Avec cette structure distribuée, une unité de commande défaillante d'une ASI peut être exclue avec un compromis limité de l'équilibrage de puissance de dérivation.

Cette solution supprime le concept d'augmentation de l'impédance physique utilisée dans l'état de la technique et donc tous les inconvénients qui lui sont liés et qui concernent le coût, l'efficacité, la fiabilité, l'encombrement et le poids.

Le contrôle de l'ouverture et de la fermeture des commutateurs de dérivation des lignes de dérivation des différentes ASI avec un délai d'activation donne au système d'onduleurs une solution pour fournir un signal de courant de sortie continu à la charge couplée au système d'ASI avec un partage équilibré du courant circulant dans les lignes de dérivation des différentes ASI.

Le système d'ASI selon l'invention permet d'avoir un niveau élevé de partage de la puissance de dérivation, de supprimer l'inductance physique, de réduire le coût global, le volume total et le poids total du système et de simplifier la procédure d'installation parallèle.

La source d'alimentation en courant alternatif (AC) utilisée dans le mode de dérivation peut être identique à celle utilisée pour le redresseur ou à une source distincte (auxiliaire).

Dans un premier aspect du système d'ASI, le premier bloc peut être configuré pour fonctionner à une première fréquence et le second bloc peut être configuré pour fonctionner à une seconde fréquence supérieure à la première fréquence, le rapport entre la seconde fréquence et la première fréquence étant proportionnel à la précision du contrôle demandé.

Le système est ainsi divisé en deux blocs fonctionnant à deux fréquences différentes. Un premier bloc fonctionnant à basse fréquence et chargé de gérer la logique et le calcul de l'angle de retard, et un deuxième bloc fonctionnant à une fréquence plus élevée permettant de commander le commutateur de dérivation en fonction des angles de retard.

Dans un deuxième aspect du système d'ASI, la première unité de chaque unité de commande peut comprendre un convertisseur de courant alternatif-continu pour échantillonner le signal de courant surveillé et un module de calcul RMS pour déterminer la valeur RMS de l'échantillon de courant.

Dans un troisième aspect du système d'ASI, la seconde unité de chaque unité de commande peut comprendre un module de communication en temps réel.

Dans un quatrième aspect du système d'ASI, la troisième unité de chaque unité de commande peut comprendre un comparateur calculant la différence entre la valeur RMS du signal de courant de son ASI et la valeur RMS de référence, et une unité de retard configurée pour calculer ledit délai d'activation après lequel le commutateur de dérivation de ladite ASI peut être fermé.

Dans un cinquième aspect du système d'ASI, l'unité à retard peut inclure un correcteur intégral proportionnel pour avoir une erreur nulle à l"état stable.

Dans un sixième aspect du système d'ASI, le délai d'activation déterminé par la troisième unité peut être un angle de retard par rapport à un angle de phase, et la troisième unité peut en outre comprendre un module de saturation configuré pour limiter l'angle de retard du délai d'activation entre un angle de retard minimal de 0° et un angle de retard maximal en fonction du nombre d'ASI dudit système d'ASI.

Le module de saturation permet ainsi de limiter la valeur de crête maximale du signal de courant qui traversera l'ASI une fois l'angle de retard appliqué.

L'angle de retard maximal sert à limiter l'intervalle dans lequel un seul commutateur de dérivation est fermé afin d'éviter la saturation d'un capteur de courant ou le déclenchement d'une protection.

Cependant, la valeur de l'angle de retard maximal peut limiter la capacité de partage et donc la possibilité d'obtenir une erreur d'état stable nulle, limitation qui est nécessaire pour éviter la saturation de tout capteur de courant ou le déclenchement de toute protection.

Dans un septième aspect du système d'ASI, le second bloc peut en outre comprendre une unité d'extraction configurée pour extraire les harmoniques fondamentales du signal de courant, une boucle à verrouillage de phase (PLL) configurée pour déterminer un angle de phase du signal de courant et détecter la passage à zéro du signal de courant, et un comparateur comparant l'angle de phase du signal de courant détecté par la PLL au délai d'activation déterminé par la troisième unité du premier bloc, la quatrième unité du deuxième bloc commandant le commutateur de dérivation selon à cette comparaison.

Pour appliquer correctement le retard, le passage par zéro du signal actuel doit être détecté. L'association d'une PLL standard avec une unité d'extraction d'harmoniques fondamentales permet une telle détection avec un signal ayant plusieurs composantes harmoniques dans le courant en raison de la charge et de la mise en forme.

La comparaison continue de l'angle de phase du signal de courant émis par la PLL avec le délai d'activation permet de détecter l'instant de démarrage du commutateur de dérivation.

### Brève description des dessins

L'invention sera mieux comprise à la lecture faite ci-après, à titre indicatif mais non limitatif, en référence aux dessins annexés.
[Fig. 1] La figure 1 est une représentation schématique d'un système d'alimentation sans interruption selon un mode de réalisation de l'invention.
[Fig. 2] La figure 2 représente schématiquement une unité de commande d'une des alimentations sans interruption du système d'alimentation de la figure 1.
[Fig. 3] La figure 3 présente un organigramme d'un procédé de fonctionnement du système d'ASI parallèle 1 en mode « dérivation » selon un mode de mise en oeuvre.

### Description des modes de réalisation

La présente invention sera décrite en relation avec des modes de réalisation particuliers et en référence à certains dessins, mais l'invention n'est pas limitée à cela, mais uniquement par les revendications. Les dessins décrits ne sont que schématiques et ne sont pas limitatifs. Dans les dessins, la taille de certains des éléments peut être exagérée et non dessinée à l'échelle à des fins d'illustration. Lorsque le terme « comprenant » est utilisé dans la présente description et les revendications, il n'exclut pas d'autres éléments ou étapes. Lorsqu'un article indéfini ou défini est utilisé pour désigner un nom singulier, par ex. « un » ou « une », « le » ou « la », cela peut inclure un pluriel de ce nom, sauf indication contraire.

Le terme « comprenant », utilisé dans les revendications, ne doit pas être interprété comme étant limité aux moyens énumérés ci-après; il n'exclut pas d'autres éléments ou étapes. Ainsi, la portée de l'expression « un dispositif comprenant les moyens A et B » ne devrait pas être limitée aux dispositifs constitués uniquement des composants A et B. Cela signifie que, par rapport à la présente invention, les seuls composants pertinents du dispositif sont A et B.

En outre, les termes premier, deuxième, troisième et similaires dans la description et les revendications sont utilisés pour distinguer des éléments similaires et pas nécessairement pour décrire un ordre séquentiel ou chronologique. Il faut comprendre que les termes ainsi utilisés sont interchangeables dans des circonstances appropriées et que les modes de réalisation de l'invention décrits ici sont capables de fonctionner dans d'autres séquences que celles décrites ou illustrées ici.

La présente invention concerne un système permettant un partage de charge égal entre des ASI, c'est-à-dore des alimentations sans interruptions, couplées en parallèle et fonctionnant en mode dérivation. Le système ne nécessite ni ajustement de la longueur des câbles ni ajout d'inductances coûteuses et est capable de fournir une répartition égale de la charge entre plus de quatre ASI couplées en parallèle.

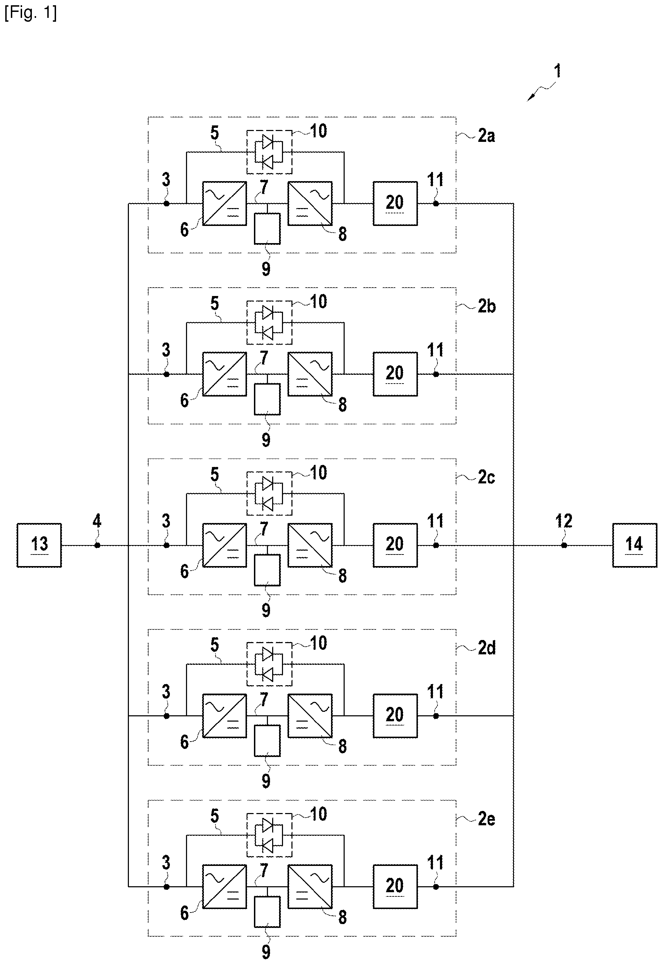

La figure 1 est un schéma fonctionnel d'un système d'ASI parallèle 1 selon les aspects décrits ici.

Le système d'ASI 1 en parallèle comprend cinq ASI 2a, 2b, 2c, 2d et 2e. Chaque ASI 2a à 2e comprend une entrée 3 couplée à une entrée principale 4, une ligne de dérivation 5, un convertisseur alternatif / continu 6, un bus continu 7, un inverseur continu / alternatif 8, un commutateur de dérivation 10 et une sortie 11 couplée vers une sortie principale 12.

L'entrée principale 4 est couplée à une source d'alimentation en courant alternatif 13 telle qu'une alimentation secteur. Pour chaque ASI 2a à 2e, l'entrée 3 de chaque ASI 2a à 2e est également couplée à une entrée du convertisseur alternatif / continu 6 et le bus continu 7 est couplé entre une sortie du convertisseur alternatif / continu 6 et une entrée de l'inverseur de courant continu / alternatif 8. Les onduleurs 2a à 2e sont couplés ensemble en parallèle, de sorte que la sortie 11 de chaque onduleur 2a à 2e est couplée à la charge 14 par l'intermédiaire de la sortie principale 12.

Dans chaque ASI 2a à 2e, le commutateur de dérivation 10 est couplé entre l'entrée 3 et la sortie 11 via la ligne de dérivation 5. Le commutateur de dérivation 10 peut comprendre deux redresseurs à commande de silicium, tels qu'un thyristor, ou un autre type de commutateur approprié, tel qu'un transistor.

Comme illustré sur la figure 1, le bus continu 7, ou bus DC, est couplé, dans ce mode de réalisation, à une batterie 9 via un convertisseur continu-continu.

Chaque ASI 2a à 2e comprend en outre un contrôleur générique, non représenté, et un contrôleur de dérivation 20 tous deux configurés pour surveiller la puissance d'entrée fournie à sa propre ASI 2a à 2e par la source d'alimentation d'entrée 13 dans différentes situations, la surveillance de la puissance d'entrée étant réalisé en surveillant le courant d'entrée. Sur la base de la présence et de la qualité de la puissance d'entrée fournie à chaque ASI 2a à 2e par la source d'alimentation d'entrée 13, le contrôleur 20 est configuré pour faire fonctionner ses ASI 2a à 2e dans différents modes de fonctionnement.

En réponse à une détermination selon laquelle le courant alternatif fourni par la source d'alimentation d'entrée 13 est inférieur ou supérieur à un niveau souhaité (par exemple, est dans une condition d'affaissement ou de gonflement), le contrôleur générique de chaque ASI 2a à 2e exploite son ASI 2a à 2e pour entrer dans un mode de fonctionnement «en ligne».

En mode de fonctionnement «en ligne», pour chaque ASI 2a à 2e, le contrôleur générique commande la fermeture d'un relais de rappel dans son ASI 2a à 2e (couplant ainsi la source d'alimentation d'entrée 13 à l'entrée 3 de son ASI) et l'ouverture du commutateur de dérivation 10 de chaque ASI 2a à 2e. Le convertisseur AC/DC 6 de chaque ASI 2a à 2e reçoit le courant alternatif de la source d'alimentation d'entrée 13 et est actionné par le contrôleur générique pour convertir le courant alternatif reçu en courant continu et fournir le courant continu à l'inverseur DC/AC 8 via le bus DC 7. L'inverseur DC/AC 8 de chaque ASI 2a à 2e est commandé par le contrôleur générique afin de convertir le courant continu reçu en un courant alternatif souhaité et fournir le courant alternatif souhaité à la sortie 11.

Toujours dans le mode de fonctionnement «en ligne», un convertisseur continu-continu couplé au bus DC 7 peut être alimenté en courant continu sur le bus DC 7 de chaque ASI 2a à 2e. Le convertisseur continu-continu convertit le courant continu reçu du bus DC en courant continu à un niveau de charge souhaité et le courant continu au niveau de charge souhaité est fourni à une batterie correspondante 9 pour charger la batterie 9.

En réponse à une constatation de panne de l'alimentation secteur fournie par la source d'alimentation d'entrée 13 (par exemple, en cas de baisse de tension ou de panne de courant), le contrôleur générique de chaque onduleur 2a à 2e commande un passage de son ASI dans un mode de fonctionnement dit de « batterie ».

En mode de fonctionnement « batterie », le contrôleur générique de chaque ASI 2a à 2e commande l'ouverture d'un relais de rappel dans son ASI (découplant ainsi la source d'alimentation 13 de l'entrée 3) et la fermeture du commutateur de dérivation 10 de son ASI. Un courant continu provenant de la batterie 9 couplée au bus DC 7 est fourni à l'inverseur DC/AC 8 et le contrôleur générique commande l'inverseur DC/AC 8 pour qu'il convertisse le courant continu reçu en un courant alternatif souhaité qui est fourni à la sortie 11.

En réponse à une détermination selon laquelle le courant alternatif fourni par la source d'alimentation d'entrée 13 est à un niveau souhaité, le contrôleur de dérivation 20 de chaque ASI 2a à 2e commande le passage de son ASI dans un mode de fonctionnement dit de « dérivation ».

Dans le mode de fonctionnement de « dérivation », le contrôleur de dérivation 20 de chaque ASI 2a à 2e commande la fermeture d'un relais de rappel (couplant ainsi la source d'alimentation d'entrée 13 à l'entrée 3) et la fermeture du commutateur de dérivation 10 de son ASI. Ainsi, dans le mode de fonctionnement de « dérivation », la ligne d'entrée 3 de chaque ASI 2a à 2e (couplée à la source d'alimentation d'entrée 13) est couplée directement à la ligne de sortie 11 de l'ASI 2a à 2e correspondante via la ligne de dérivation 5. En mode de fonctionnement de «dérivation », le courant alternatif reçu sur la ligne d'entrée 3 de chaque ASI 2a à 2e en provenance de la source d'alimentation d'entrée 13 est fourni directement à la sortie 11.

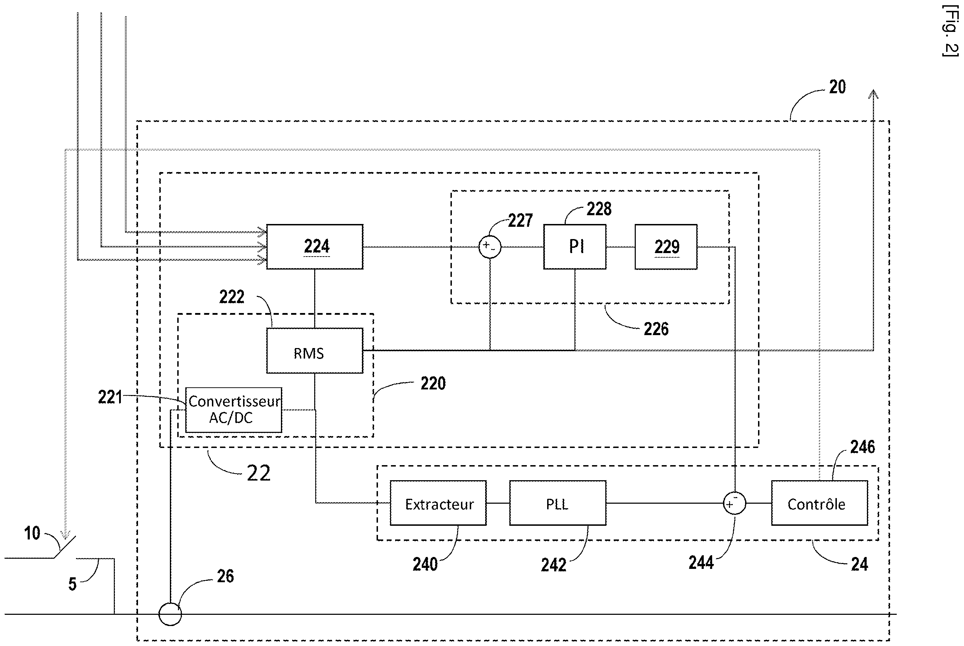

La figure 2 représente schématiquement un contrôleur de dérivation 20 de l'une des ASI 2a à 2e du système d'ASI 1 de la figure 1.

Le contrôleur de dérivation 20 comprend un premier bloc 22, un deuxième bloc 24 et un capteur de courant 26 utilisé dans la détermination du signal de courant circulant dans l'ASI 2a à 2e.

Le premier bloc 22 fonctionne à une première fréquence d'environ 50 Hz et est chargé de gérer la logique et le calcul de l'angle de retard. Le deuxième bloc 24 fonctionne à une deuxième fréquence d'environ 5 kHz et est chargé de commander le commutateur de dérivation en fonction des angles de retard calculés par le premier bloc 22.

Le premier bloc 22 comprend une première unité 220, une deuxième unité 224 et une troisième unité 226, La première unité 220 surveille le signal de courant circulant dans la ligne de dérivation 5 de son ASI, et donc à travers l'ASI en mode « dérivation », et détermine une valeur efficace de l'intensité du courant. La deuxième unité 224 collecte les valeurs RMS de son ASI, par exemple l'ASI 2a, et des autres ASI, soit les ASI 2b à 2e dans cet exemple, du système d'ASI 1 pour lequel le commutateur de dérivation 10 est fermé. La deuxième unité 224 définit ensuite une valeur de référence RMS correspondant à la valeur RMS la plus basse collectée. La troisième unité 226 est configurée pour déterminer un délai d'activation pour la fermeture du commutateur de dérivation 10 de son ASI, 2a dans cet exemple.

La première unité 220 du contrôleur de dérivation 20 comprend un convertisseur de courant AC/DC 221 pour échantillonner, à travers la résistance de dérivation 26, le signal de courant surveillé. La première unité 220 comprend également un module de calcul RMS 222 pour déterminer la valeur RMS de l'échantillon de courant délivré par le convertisseur de courant AC/DC 221.

La seconde unité 224 du contrôleur de dérivation 20 comprend un module de communication en temps réel recevant la valeur RMS déterminée par le module de calcul RMS 222 du même premier bloc 22 comprenant la seconde unité 224, c'est-à-dire de l'ASI 2a dans cet exemple, ainsi que la valeur RMS déterminée par le module de calcul RMS du premier bloc des autres ASI, 2b à 2e dans cet exemple.

La deuxième unité 224 détermine parmi toutes les différentes valeurs RMS des ASI avec un précédent angle de retard égal à zéro à l'étape précédente, celle qui est la valeur RMS la plus basse et la définit comme une valeur de référence RMS avec un angle de retard défini à zéro.

Le module de calcul RMS 222 transmet également la valeur RMS calculée aux contrôleurs de toutes les autres ASI du système d'ASI 1.

La troisième unité 226 du contrôleur de dérivation 20 comprend un comparateur 227 recevant la valeur RMS du signal de courant de son ASI déterminé par l'unité de calcul RMS 222 de l'unité de surveillance 220 et la valeur de référence RMS déterminée par la seconde unité 224, et un module de retard 228 couplé à la sortie du comparateur 227 et comprenant un correcteur proportionnel intégral pour avoir une erreur d'état stable à zéro.

Le comparateur 227 calcule la différence entre la valeur efficace du signal de courant de son onduleur et la valeur de référence efficace, puis transmet le résultat au module de retard 228.

Si la différence calculée par le comparateur 227 est égale à zéro, le module de retard 228 met à zéro le délai d'activation, ce qui correspond alors à l'ordre de maintenir le commutateur de dérivation 10 fermé.

Si la différence calculée par le comparateur 227 est différente de zéro, le module de retard 228 calcule un délai d'activation correspondant au délai après lequel le commutateur de dérivation 10 de son ASI peut être fermé, le commutateur de dérivation 10 étant commandé pour s'ouvrir entre le moment où le signal actuel franchit le zéro et la fin du délai d'activation.

Dans ce mode de réalisation, le retard d'activation déterminé par le module de retard 228 de la troisième unité 226 est un angle de retard par rapport à un angle de phase, et la troisième unité 226 est un module de saturation 229 limitant l'angle de retard du retard d'activation émis par le module de retard 228 entre un angle de retard minimal de 0° et un angle de retard maximal en fonction du nombre d'ASI dudit système d'ASI 1 afin de limiter la valeur de crête maximale du signal de courant qui traversera l'ASI une fois que l'angle de retard est appliqué .

Le second bloc 24 comprend une unité d'extraction 240 recevant l'échantillon de courant délivré par le convertisseur de courant AC/DC 221 de la première unité 220 du premier bloc 22, et une unité de boucle à verrouillage de phase (PLL) 242 couplée à la sortie de l'unité d'extraction.

L'unité d'extraction 240 extrait les harmoniques fondamentales du signal de courant et les transmet à l'unité PLL 242 qui détermine un angle de phase du signal de courant et détecte le passage à zéro du signal de courant.

Le deuxième bloc 24 comprend en outre un comparateur 244 et une unité de contrôle 246.

Le comparateur 244 reçoit l'angle de retard déterminé par la troisième unité 226 du premier bloc 22 en même temps que l'angle de phase du signal de courant déterminé par la PLL 242 du deuxième bloc 24. Le comparateur 244 compare l'angle de phase du signal de courant détecté par la PLL 242 au délai d'activation déterminé par la troisième unité 226 et envoie le résultat à l'unité de commande 246 du deuxième bloc 24.

L'unité de contrôle 246 commande le commutateur de dérivation 10 de l'ASI en fonction de cette comparaison. Le commutateur de dérivation 10 est maintenu fermé si le délai d'activation est égal à zéro et il est ouvert à partir du moment où le signal de courant de l'ASI passe à zéro jusqu'à la fin d'une période correspondant au délai d'activation lorsque le commutateur de dérivation 10 est fermé à nouveau.

Ainsi, à tout moment, il y a toujours au moins un commutateur de dérivation qui est fermé afin d'assurer un chemin direct entre l'entrée principale et la sortie principale du système d'ASI.

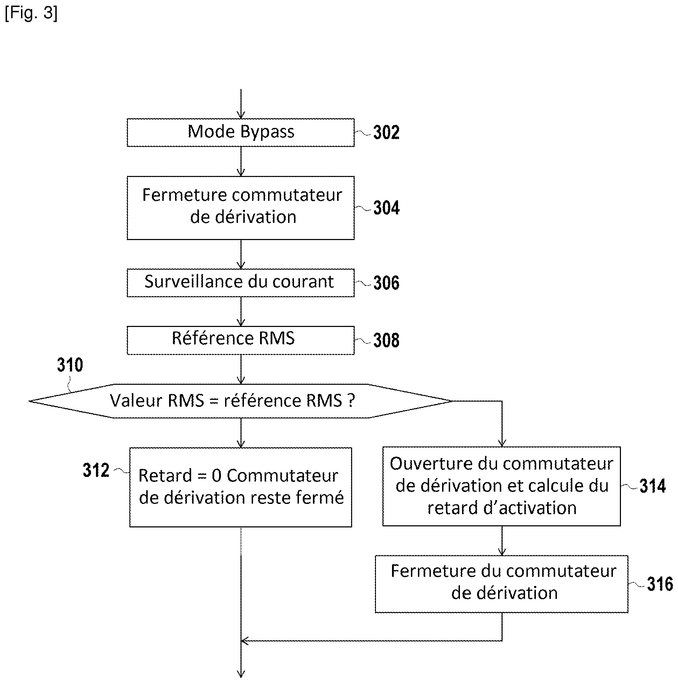

La commutation des ASI en mode « dérivation » est décrite plus en détail ci-dessous en relation avec les figures 2 et 3.

La figure 3 est un organigramme de processus illustrant un mode de réalisation du fonctionnement du système d'ASI parallèle 1 en mode « dérivation ».

A l'étape 302, le contrôleur de dérivation 20 indique que l'ASI auquel appartient le contrôleur de dérivation 20 doit fonctionner dans le mode de fonctionnement « dérivation ».

A l'étape 304, en réponse à la détermination de la commande de fonctionnement de son ASI dans le mode de fonctionnement « dérivation », le contrôleur de dérivation 20 commande la fermeture du commutateur de dérivation 10 de son ASI, couplant ainsi l'entrée 3 de son ASI à sa sortie 10. Après la fermeture du commutateur de dérivation 10 de chaque ASI, chaque ASI 2a à 2e fournit une puissance de sortie non conditionnée (fournie directement à partir de l'entrée 3) à la charge 14 via sa ligne de dérivation 5. Plus précisément, une fois le commutateur de dérivation 10 de chaque ASI 2a à 2e fermé, chaque ASI 2a à 2e fournit un courant de sortie ayant une forme d'onde de courant à la charge 14.

A l'étape 306, la première unité 220 du premier bloc 22 du contrôleur de dérivation 20 de chaque ASI 2a à 2e surveille le courant de sortie de son ASI.

Ensuite, à l'étape 308, la deuxième unité 224 du premier bloc 22 de chaque contrôleur de dérivation 20 détermine le courant de sortie le plus bas de toutes les ASI 2a à 2e (c'est-à-dire la valeur la plus faible de la valeur moyenne quadratique (RMS)) et le définit comme la valeur de référence RMS.

A l'étape 310, le comparateur 227 de la troisième unité 226 du premier bloc 22 de chaque contrôleur de dérivation 20 compare sa valeur RMS à la valeur de référence RMS.

Si la valeur RMS de son ASI est égale à la valeur de référence RMS, à l'étape 312, la deuxième unité 226 du premier bloc 22 du contrôleur de dérivation 20 de l'ASI fixe à zéro le délai d'activation et maintient fermé le commutateur de dérivation 10 de son ASI même au passage par zéro de la forme d'onde du courant de sortie. Dans un tel cas, le courant circulant dans le commutateur de dérivation 10 de l'ASI est une forme d'onde sinusoïdale complète et la charge 14 couplée à la sortie 11 de l'ASI reçoit en continu la forme d'onde sinusoïdale complète de cette ASI.

Si la valeur RMS de son onduleur est supérieure à la valeur de référence RMS, à l'étape 314, le contrôleur de dérivation 20 de l'onduleur ouvre le commutateur de dérivation 10 de son onduleur et exécute un processus de régulation pour que la deuxième unité 226 du premier bloc 22 de son contrôleur détermine un délai d'activation après lequel le commutateur de dérivation 10 sera fermé.

A l'étape 316, le contrôleur de dérivation 20 d'une ASI dont le commutateur de dérivation est ouvert ferme finalement le commutateur de dérivation 10 à la fin du délai d'activation.

Par exemple, selon au moins un mode de réalisation, le contrôleur de dérivation 20 d'un onduleur avec une valeur efficace supérieure à la valeur de référence RMS commande l'ouverture du commutateur de dérivation 10 de son ASI pendant une période de retard au passage à zéro de sa forme d'onde de courant de sortie.

En d'autres termes, le contrôleur de dérivation 20 de chaque ASI ayant une valeur RMS supérieure à la valeur de référence RMS (c'est-à-dire, les ASI qui n'ont pas le courant de sortie le plus faible) actionne le commutateur de dérivation 10 de son ASI pour qu'il s'ouvre pendant un délai le passage à zéro de la forme d'onde du courant de sortie de l'ASI. Lorsqu'un commutateur de dérivation 10 est ouvert au passage par zéro, le courant ne peut pas traverser le commutateur de dérivation 10. Après la période de retard, le contrôleur de dérivation 20 ferme le commutateur de dérivation 10, le courant passe à travers le commutateur de dérivation 10 et la forme d'onde de courant de sortie est fournie à la charge 14 à partir de l'onduleur correspondant.

Au passage à zéro du courant de sortie de chaque ASI, au moins une ASI (celle qui a la valeur RMS la plus basse) alimente la charge 14. La charge 14 est transférée progressivement d'une ASI à l'autre (c.-à-d., après le délai correspondant après le passage par zéro de la forme d'onde du courant de sortie de chaque autre onduleur). Ainsi, la charge 14 est progressivement partagée entre les différentes ASI. Chaque contrôleur de dérivation 20 commande cette « commutation » de la ligne de dérivation 5 de son ASI en parallèle avec la ligne de dérivation 5 de l'ASI qui est restée fermée (après chaque passage à zéro) de sorte que l'énergie fournie à la charge 14 soit partagée de manière égale entre les ASI 2a à 2e.

Plus spécifiquement, chaque contrôleur de dérivation 20 configure le délai d'activation de son ASI 2a à 2e de telle sorte que la valeur quadratique moyenne (RMS) du courant de sortie de son ASI soit sensiblement identique à la valeur de référence RMS. En ajustant activement le délai d'activation de chaque ASI ayant une valeur RMS différente de la valeur de référence RMS, la valeur quadratique moyenne (RMS) du courant de sortie de chaque ASI 2a à 2e peut être configurée sensiblement de la même façon, malgré les différences potentielles de composants et de câblage dans chaque ASI 2a à 2e. Lorsque la valeur efficace du courant de sortie de chaque ASI 2a à 2e (c'est-à-dire la partie de répartition de charge de chaque ASI) est sensiblement identique, l'écart entre les parties de partage de charge de chaque ASI 2a à 2e est relativement faible (par exemple, environ 0,1%) et huit ASI ou plus peuvent être couplées en parallèle avec succès (c.-à-d. avec un partage de charge égal).

En fournissant une forme d'onde de courant de sortie complète à la charge 14 via les ASI ayant la valeur RMS la plus basse et en introduisant activement une période de retard dans la forme d'onde de courant de sortie de chaque ASI pour contrôler la valeur efficace du courant de sortie de chaque ASI 2a à 2e à être sensiblement identiques, une répartition égale de la charge entre les différents ASI 2a à 2e est fournie et la surcharge des ASI 2a à 2e peut être empêchée. De plus, le flux de puissance à travers les ASI ayant une valeur RMS supérieure à la valeur de référence RMS peut être réduit car chacune de ces ASI fournit moins d'un cycle complet d'une forme d'onde de courant de sortie à la charge 14. Le flux de puissance réduit à travers ces ASI peut résulter en une réduction de la quantité de chaleur générée dans chacun de ces ASI et l'impact sur les disjoncteurs dans chacune de ces ASI pourrait également être réduit.

Selon un mode de réalisation, le contrôleur de dérivation 20 est configuré pour analyser et mettre à jour le partage de charge entre les différentes ASI 2a à 2e à chaque fois que le système d'ASI 1 passe en mode « dérivation ».

Comme décrit ci-dessus, le système et le procédé permettant un partage de charge égal sont utilisés avec un système d'ASI parallèle, y compris des ASI en ligne. Cependant, dans d'autres modes de réalisation, le système et le procédé décrits ici peuvent être utilisés avec d'autres types d'ASI ou de systèmes d'alimentation, couplés en parallèle, afin de fournir une répartition égale de la charge avec des sorties d'alimentation non régulées.

Comme discuté ci-dessus, un système pour fournir une répartition de charge égale entre des ASI couplées en parallèle et fonctionnant en mode dérivation est fourni ici. Le système ne nécessite ni ajustement de la longueur des câbles ni ajout d'inductances coûteuses et peut inclure plus de quatre ASI couplées en parallèle. En fournissant une forme d'onde de courant de sortie complète à une charge via des ASI fonctionnant en continu dans un mode de dérivation et en introduisant activement une période de retard dans la forme d'onde de courant de sortie de chacune des autres ASI couplée en parallèle afin d'avoir des valeurs RMS du courant de sortie de chaque ASI relativement égalent, un partage égal de charge entre les ASI peut être assuré en dépit des différences potentielles dans les composants et le câblage de chaque onduleur. Comme le courant de sortie de chaque onduleur (c.-à-d. la partie de partage de charge de chaque onduleur) est sensiblement identique, l'écart entre les portions de partage de charge de chaque ASI est relativement faible (par exemple, environ 0,1%) et plus de quatre ASI peuvent être couplées en parallèle avec succès tout en réduisant un bon nombre des risques associés au partage de charge entre des ASI fonctionnant en mode dérivation couplées en parallèle.

Ayant ainsi décrit plusieurs aspects d'au moins un mode de réalisation de la présente invention, il convient de comprendre que diverses modifications, modifications et améliorations apparaîtront facilement à l'homme de l'art. De telles alternatives, modifications et améliorations sont destinées à faire partie de la présente description et sont destinées à être dans la portée de l'invention telle que définie par les revendications annexées.

En conséquence, la description ci-dessus et les dessins ne sont donnés qu'à titre d'exemple, la portée de l'invention est définie par les revendications annexées.

## Revendications

1. Système d'alimentation sans interruption, système d'ASI, (1) comprenant une pluralité de sources d'alimentation sans coupure, ASI, (2a à 2e) couplées en parallèle entre une entrée principale (4) configurée pour être couplée à une source d'alimentation (13) et recevoir une puissance d'entrée, et une sortie principale (12) configurée pour être couplée à une charge (14) et fournir une puissance de sortie à la charge (14) dérivée d'au moins la puissance d'entrée, chaque ASI (2a à 2e) comprenant :
- une entrée (3) couplée à l'entrée principale (4),
- une sortie (11) couplée à la sortie principale (12), et
- une ligne de dérivation (5) couplée entre l'entrée (3) et la sortie (11) via un commutateur de dérivation (10) configuré pour être fermé dans un premier mode de fonctionnement, couplant ladite entrée (3) à ladite sortie (11) via la ligne de dérivation (5), et pour être ouvert dans un deuxième mode de fonctionnement, découplant ladite entrée (3) de ladite sortie (11), **caractérisé en ce que**, chaque ASI (2a à 2e) du système d'ASI (1) comprend une unité de commande (20), chacune desdites unités de commande est configurée pour être en communication avec toutes les autres unités de commande (20) du système d'ASI (1), l'unité de commande (20) de chaque ASI (2a à 2e) comprenant :
- un premier bloc (22) comprenant une première unité (220) configurée pour surveiller un signal de courant circulant dans la ligne de dérivation de son ASI et déterminer une valeur quadratique moyenne, RMS, c'est-à-dire une valeur efficace, de l'intensité du courant dudit signal de courant, une deuxième unité (224) configurée pour collecter les valeurs RMS de son ASI et des autres ASI du système d'ASI (1) pour lequel le commutateur de dérivation est fermé, et pour définir une valeur de référence RMS correspondant à la valeur RMS la plus basse collectée, et une troisième unité (226) configurée pour déterminer un délai d'activation pour la fermeture du commutateur de dérivation de son ASI, le retard d'activation étant égal à zéro si la valeur RMS de son ASI est égale à la valeur de référence RMS et le délai d'activation étant différent de zéro sinon, et
- un deuxième bloc (24) comprenant une quatrième unité (246) configurée pour contrôler le commutateur de dérivation (10) de son ASI en fonction du délai d'activation émis par la troisième unité (226), le commutateur de dérivation (10) est configuré pour être maintenu fermé si le délai d'activation est à zéro, sinon le commutateur de dérivation est configuré pour être ouvert pendant un certain temps correspondant au délai d'activation puis fermé.

2. Système d'ASI (1) selon la revendication 1, dans lequel le premier bloc (22) est configuré pour fonctionner à une première fréquence et le second bloc (24) est configuré pour fonctionner à une seconde fréquence supérieure à la première fréquence, le rapport entre la seconde fréquence et la première fréquence étant proportionnel à la précision du contrôle demandé.

3. Système d'ASI (1) selon l'une des revendications 1 ou 2, dans lequel la première unité (220) de chaque unité de commande (20) comprend un convertisseur de courant alternatif-continu (221) pour échantillonner le signal de courant surveillé et un module de calcul RMS pour déterminer la valeur RMS de l'échantillon de courant.

4. Système d'ASI (1) selon l'une des revendications 1à 3, dans lequel la seconde unité (224) de chaque unité de commande (20) comprend un module de communication en temps réel.

5. Système d'ASI (1) selon l'une des revendications 1 à 4, dans lequel la troisième unité (226) de chaque unité de commande (20) comprend un comparateur (227) configuré pour calculer la différence entre la valeur RMS du signal de courant de son ASI et la valeur RMS de référence, et une unité de retard (228) configurée pour calculer ledit délai d'activation après lequel le commutateur de dérivation (10) de ladite ASI est fermé.

6. Système d'ASI (1) selon l'une des revendications 1 à 5, dans lequel l'unité à retard (228) comprend un correcteur intégral proportionnel pour avoir une erreur nulle à l"état stable.

7. Système d'ASI (1) selon l'une des revendications 1 à 6, dans lequel le délai d'activation (28) déterminé par la troisième unité (226) est un angle de retard par rapport à un angle de phase, et la troisième unité (226) comprend en outre un module de saturation (229) configuré pour limiter l'angle de retard du délai d'activation entre un angle de retard minimal de 0° et un angle de retard maximal en fonction du nombre d'ASI dudit système d'ASI (1).

8. Système d'ASI (1) selon l'une des revendications 1 à 7, dans lequel le second bloc (24) comprend en outre une unité d'extraction (240) configurée pour extraire les harmoniques fondamentales du signal de courant, une boucle à verrouillage de phase, PLL, (242) configurée pour déterminer un angle de phase du signal de courant et détecter la passage à zéro du signal de courant, et un comparateur (244) configuré pour comparer l'angle de phase du signal de courant détecté par la PLL (242) au délai d'activation déterminé par la troisième unité (226) du premier bloc (22), la quatrième unité (246) du deuxième bloc (22) configurée pour commander le commutateur de dérivation (10) selon à cette comparaison.

## Patentansprüche

1. Unterbrechungsfreies Stromversorgungssystem, USV-System, (1), das eine Vielzahl von unterbrechungsfreien Stromversorgungsquellen, USV, (2a bis 2e) umfasst, die zwischen einem Haupteingang (4), der dazu ausgestaltet ist, an eine Stromversorgungsquelle (13) gekoppelt zu sein und eine Eingangsleistung zu empfangen, und einem Hauptausgang (12) parallel geschaltet sind, der dazu ausgestaltet ist, an eine Last (14) gekoppelt zu sein und der Last (14) eine Ausgangsleistung zu liefern, die von mindestens der Eingangsleistung stammt, wobei jede USV (2a bis 2e) Folgendes umfasst:
- einen Eingang (3), der an den Haupteingang (4) gekoppelt ist,
- einen Ausgang (11), der an den Hauptausgang (12) gekoppelt ist, und
- eine Bypass-Leitung (5), die zwischen dem Eingang (3) und dem Ausgang (11) über einen Bypass-Schalter (10) gekoppelt ist, der dazu ausgestaltet ist, in einem ersten Betriebsmodus geschlossen zu sein, welcher den Eingang (3) über die Bypass-Leitung (5) an den Ausgang (11) koppelt, und in einem zweiten Betriebsmodus offen zu sein, welcher den Eingang (3) von dem Ausgang (11) entkoppelt, **dadurch gekennzeichnet, dass** jede USV (2a bis 2e) des USV-Systems (1) eine Steuereinheit (20) umfasst, wobei jede der Steuereinheiten dazu ausgestaltet ist, mit sämtlichen anderen Steuereinheiten (20) des USV-Systems (1) in Verbindung zu stehen, wobei die Steuereinheit (20) von jeder USV (2a bis 2e) Folgendes umfasst:
- einen ersten Block (22), der eine erste Einheit (220), die dazu ausgestaltet ist, ein Stromsignal, das in der Bypass-Leitung ihrer USV umläuft, zu überwachen und einen quadratischen Mittelwert, RMS, das heißt einen Effektivwert, der Stärke des Stroms des Stromsignals zu bestimmen, eine zweite Einheit (224), die dazu ausgestaltet ist, die RMS-Werte ihrer USV und der anderen USV des USV-Systems (1) zu sammeln, für die der Bypass-Schalter geschlossen ist, und einen RMS-Bezugswert zu definieren, der dem niedrigsten gesammelten RMS-Wert entspricht, und eine dritte Einheit (226) umfasst, die dazu ausgestaltet ist, einen Aktivierungsverzug für das Schließen des Bypass-Schalters ihrer USV zu bestimmen, wobei die Aktivierungsverzögerung gleich null ist, wenn der RMS-Wert ihrer USV gleich dem RMS-Bezugswert ist, und der Aktivierungsverzug sich anderenfalls von null unterscheidet, und
- einen zweiten Block (24), der eine vierte Einheit (246) umfasst, die dazu ausgestaltet ist, den Bypass-Schalter (10) ihrer USV in Abhängigkeit von dem durch die dritte Einheit (226) ausgegebenen Aktivierungswert zu steuern, wobei der Bypass-Schalter (10) dazu ausgestaltet ist, geschlossen gehalten zu werden, wenn der Aktivierungsverzug gleich null ist, und der Bypass-Schalter dazu ausgestaltet ist, anderenfalls während einer gewissen Zeit, die dem Aktivierungsverzug entspricht, geöffnet und dann geschlossen zu werden.

2. USV-System (1) nach Anspruch 1, wobei der erste Block (22) dazu ausgestaltet ist, mit einer ersten Frequenz betrieben zu werden, und der zweite Block (24) dazu ausgestaltet ist, mit einer zweiten Frequenz betrieben zu werden, die höher ist als die erste Frequenz, wobei das Verhältnis zwischen der zweiten Frequenz und der ersten Frequenz proportional zur Präzision der angeforderten Steuerung ist.

3. USV-System (1) nach einem der Ansprüche 1 oder 2, wobei die erste Einheit (220) von jeder Steuereinheit (20) einen Wechselstrom-Gleichstromwandler (221) zum Abtasten des überwachten Stromsignals und ein RSM-Berechnungsmodul zum Bestimmen des RMS-Werts der Stromabtastung umfasst.

4. USV-System (1) nach einem der Ansprüche 1 bis 3, wobei die zweite Einheit (224) von jeder Steuereinheit (20) ein Echtzeit-Kommunikationsmodul umfasst.

5. USV-System (1) nach einem der Ansprüche 1 bis 4, wobei die dritte Einheit (226) von jeder Steuereinheit (20) einen Komparator (227), der dazu ausgestaltet ist, die Differenz zwischen dem RMS-Wert des Stromsignals seiner USV und dem RMS-Bezugswert zu berechnen, und eine Verzögerungseinheit (228) umfasst, die dazu ausgestaltet ist, den Aktivierungsverzug zu berechnen, nachdem der Bypass-Schalter (10) der USV geschlossen wurde.

6. USV-System (1) nach einem der Ansprüche 1 bis 5, wobei die Verzögerungseinheit (228) einen Proportional-Integral-Regler umfasst, um im stabilen Zustand einen Fehler von null aufzuweisen.

7. USV-System (1) nach einem der Ansprüche 1 bis 6, wobei der durch die dritte Einheit (226) bestimmte Aktivierungsverzug (28) ein Verzögerungswinkel in Bezug auf einen Phasenwinkel ist, und die dritte Einheit (226) ferner ein Sättigungsmodul (229) umfasst, das dazu ausgestaltet ist, den Verzögerungswinkel des Aktivierungsverzugs zwischen einem Mindestverzögerungswinkel von 0° und einem Höchstverzögerungswinkel in Abhängigkeit von der Anzahl von USV des USV-Systems (1) zu begrenzen.

8. USV-System (1) nach einem der Ansprüche 1 bis 7, wobei der zweite Block (24) ferner eine Extraktionseinheit (240), die dazu ausgestaltet ist, die Grundharmonischen des Stromsignals zu extrahieren, eine Phasenregelschleife, PLL, (242), die dazu ausgestaltet ist, einen Phasenwinkel des Stromsignals zu bestimmen und den Nulldurchgang des Stromsignals zu bestimmen, und einen Komparator (244) umfasst, der dazu ausgestaltet ist, den durch die PLL (242) festgestellten Phasenwinkel des Stromsignals mit dem durch die dritte Einheit (226) des ersten Blocks (22) bestimmten Aktivierungsverzug zu vergleichen, wobei die vierte Einheit (246) des zweiten Blocks (22) dazu ausgestaltet ist, den Bypass-Schalter (10) gemäß diesem Vergleich zu steuern.

## Claims

1. An uninterruptible power supply system, UPS system, (1) comprising a plurality of uninterruptible power supply, UPS, sources (2a to 2e) coupled in parallel between a main input (4) configured to be coupled to a power supply source (13) and receive an input power, and a main output (12) configured to be coupled to a load (14) and provide output power to the load (14) derived from at least the input power, each UPS (2a to 2e) comprising:
- an input (3) coupled to the main input (4),
- an output (11) coupled to the main output (12), and
- a bypass line (5) coupled between the input (3) and the output (11) via a bypass switch (10) configured to be closed in a first operating mode, coupling said input (3) to said output (11) via the bypass line (5), and to be opened in a second operating mode, decoupling said input (3) from said output (11), **characterized in that**, each UPS (2a to 2e) of the UPS system (1) comprises a control unit (20), each of the control units is configured to be in communication with all the other control units (20) of the UPS system (1), the control unit (20) of each UPS (2a to 2e) comprising:
- a first block (22) comprising a first unit (220) configured to monitor a current signal flowing in the bypass line of its UPS and determine a root mean square value, RMS, that is to say an effective value, of the current strength of said current signal, a second unit (224) configured to collect the RMS values of its UPS and other UPSs of the UPS system (1) for which the bypass switch is closed, and to set an RMS reference value corresponding to the lowest collected RMS value, and a third unit (226) configured to determine an activation delay for closing the bypass switch of its UPS, the activation delay being equal to zero if the RMS value of its UPS is equal to the reference RMS value and the activation delay being different from zero otherwise, and
- a second block (24) comprising a fourth unit (246) configured to control the bypass switch (10) of its UPS according to the activation delay emitted by the third unit (226), the bypass switch (10) is configured to be kept closed if the activation delay is at zero, otherwise the bypass switch is configured to be opened for a certain time corresponding to the activation delay and then closed.

2. The UPS system (1) according to claim 1, wherein the first block (22) is configured to operate at a first frequency and the second block (24) is configured to operate at a second frequency higher than the first frequency, the ratio of the second frequency to the first frequency being proportional to the precision of the requested control.

3. The UPS system (1) according to one of claims 1 or 2, wherein the first unit (220) of each control unit (20) comprises an AC-DC converter (221) to sample the monitored current signal and an RMS calculation module to determine the RMS value of the current sample.

4. The UPS system (1) according to one of claims 1 to 3, wherein the second unit (224) of each control unit (20) comprises a real-time communication module.

5. The UPS system (1) according to one of claims 1 to 4, wherein the third unit (226) of each control unit (20) comprises a comparator (227) configured to calculate the difference between the RMS value of the current signal of its UPS and the reference RMS value, and a delay unit (228) configured to calculate said activation delay after which the bypass switch (10) of said UPS is closed.

6. The UPS system (1) according to any of claims 1 to 5, wherein the delay unit (228) comprises a proportional integral corrector to have zero error at steady state.

7. The UPS system (1) according to one of claims 1 to 6, wherein the activation delay (28) determined by the third unit (226) is a delay angle relative to a phase angle, and the third unit (226) further comprises a saturation module (229) configured to limit the delay angle of the activation delay between a minimum delay angle of 0° and a maximum delay angle depending on the number of UPSs of said UPS system (1).

8. The UPS system (1) according to one of claims 1 to 7, wherein the second block (24) further comprises an extraction unit (240) configured to extract fundamental harmonics from the current signal, a phase locked loop, PLL, (242) configured to determine a phase angle of the current signal and detect the zero crossing of the current signal, and a comparator (244) configured to compare the phase angle of the current signal detected by the PLL (242) at the activation delay determined by the third unit (226) of the first block (22), the fourth unit (246) of the second block (22) configured to control the bypass switch (10) according to this comparison.
